# EUROPÄISCHE PATENTSCHRIFT

(11) **EP 2 824 784 B1**
(45) Veröffentlichungstag und Bekanntmachung des Hinweises auf die Patenterteilung: **27.04.2016**
(21) Anmeldenummer: 14171007.9
(22) Anmeldetag: 03.06.2014
(51) Int. Cl.: H02G 3/12

(54) **Installationsdose**
Installation box
Boîtier d'installation

(30) Priorität: 08.07.2013 DE 202013103005 U
(43) Veröffentlichungstag der Anmeldung: 14.01.2015
(73) Patentinhaber: F-Tronic Winfried Fohs Gesellschaft mit beschränkter Haftung, 66131 Saarbrücken (DE)
(72) Erfinder: Fohs, Peter, 66399 Mandelbachtal (DE)
(74) Vertreter: Wieske, Thilo

(56) Entgegenhaltungen:
- DE-U1-202012 005 863
- US-A- 3 896 960
- US-A- 3 980 197
- US-A1- 2003 085 225

## Beschreibung

Die vorliegende Erfindung betrifft eine Installationsdose für die Hohlwandinstallation zur Aufnahme von elektrotechnischen oder elektronischen Bauelementen nach dem Oberbegriff des Anspruchs 1 sowie ein Verfahren zur Installation einer derartigen Installationsdose gemäß Anspruch 10.

Im Querschnitt zylindrische Installationsdosen für die Hohlwandinstallation von Wänden sind aus dem Stand der Technik bekannt. Bei den Hohlwänden handelt es sich beispielsweise um Wände, die in Ständerbauweise errichtet und mit Gipskartonplatten beplankt werden. Zwischen den Beplankungen auf den beiden Seiten der Wände können - zwischen den die Hohlwand tragenden Ständerelementen - Wärmedämmelemente vorgesehen sein.

Hohlwände können auch an Decken existieren. Dies gilt insbesondere dann, wenn eine Decke durch eine Konstruktion mit Gipskartonplatten abgehängt ist, so dass zwischen den Gipskartonplatten und der Decke ein Hohlraum entsteht. Auch dieser Hohlraum kann mit Wärmedämmelementen gefüllt sein, die außer einer Wärmeisolation noch einen Schallschutz bewirken. Bei derartigen Decken besteht häufig der Wunsch, Einbauleuchten zu integrieren. Auch diese Einbauleuchten werden in Installationsdosen eingesetzt, die hinsichtlich ihrer Befestigung den Hohlwandinstallationsdosen weitgehen vergleichbar sind. Gerade bei den Einbauleuchten besteht die Anforderung, dass die Installationsdose in ihrer Abmessung so dimensioniert ist, dass diese die Einbauleuchte aufnehmen kann und dabei im Randbereich aus optischen Gründen noch von einer Blende der Einbauleuchte überdeckt wird. Dennoch ist es vielfach erforderlich, weitere elektronische Bauteile unterzubringen wie beispielsweise Relais oder Transformatoren. Dazu ist es bekannt, dass die Installationsdosen "hinter der Gipskartonplatte" einen seitlich abragenden Installationsraum aufweisen. Dieser ist dann nicht sichtbar. Derartige Installationsdosen können beispielsweise aus mehreren Teilen bestehen, die beim Einsetzen in die Hohlwand (bzw. Hohldecke) zusammengesetzt werden. Dadurch wird dann zur Installationsdose ein von außen nicht sichtbarer Installationsraum geschaffen. Der Installationsraum gewährleistet dennoch, dass das Wärmedämmmaterial nicht unmittelbar mit dem elektronischen Bauteil in Berührung kommt.

Die vorher beschriebenen Hohlwandinstallationsdosen dienen zur Aufnahme von elektrotechnischen oder elektronischen Bauelementen, wie beispielsweise Schalter, Steckdosen oder Dergleichen, wobei die Installationsdose von der Rauminnenseite in eine zu den äußeren Maßen der Installationsdose passgenaue Ausnehmung in der Beplankung der Hohlwand eingesetzt wird.

Sofern zwei Hohlwanddosen eng benachbart angeordnet werden sollen, können entsprechende kreisförmige Löcher in der Beplankung angeordnet sein, so dass zwei Hohlwanddosen - beispielsweise im Normabstand üblicher Doppelblenden (d.h. 71 mm) - unmittelbar nebeneinander angeordnet werden können. Ein Problem hierbei ist, dass wegen des geringen Abstandes der kreisförmigen Löcher (Lochdurchmesser: 68 mm bei einem Abstand der Löcher von 71 mm) die Löcher, in die die Hohlwanddosen einsetzbar sind, so dicht beieinander liegen, dass die verbleibende "Brücke" der Beplankung zwischen den Löchern mechanisch nur noch eine geringe Stabilität aufweist. Zudem muss der Montierende darauf achten, dass beide Dosen exakt richtig und niveaugleich positioniert sind. Solche benachbarten Dosen können bodenseitig durch einen Kombinationsstutzen verbunden werden, so dass Leitungen von der einen Dose zur anderen geführt werden können.

Ebenfalls sind Doppelinstallationsdosen für die Hohlwandinstallation bekannt zur Aufnahme von zwei elektrotechnischen oder elektronischen Bauelementen. Diese bestehen aus einem einheitlichen Aufnahmeraum für die beiden Bauelemente. Für diese Doppelinstallationsdosen müssen zunächst - wie vorstehend beschrieben - zwei Löcher im passgenauen Abstand gebohrt werden. Anschließend muss der "Steg" zwischen den beiden Löchern entfernt werden, um die Doppelinstallationsdose einsetzen zu können.

Problematisch bei diesen Doppelinstallationsdosen ist jedoch, dass die Ausnehmung entsprechend den Dimensionen der Doppelinstallationsdose in die Wand eingebracht werden muss. Für diese Doppelinstallationsdosen müssen zunächst - wie vorstehend beschrieben - zwei Löcher im passgenauen Abstand gebohrt werden. Anschließend muss der "Steg" zwischen den beiden Löchern entfernt werden, um die Doppelinstallationsdose einsetzen zu können. Sowohl das richtige Positionieren der Bohrungen als auch die Entfernung des Stegs kann zu Schwierigkeiten führen, wie Fehlpositionierung der Dose oder Einreißen der Wand während der Entfernung des Stegs.

Aus verschiedenen Veröffentlichungen (US 2003/0085225 A1; US-PS 3,896,960) ist es bekannt, eine Hohlwanddose so auszugestalten, dass dieser aus einem Dosenkörper besteht mit einem daran seitlich angeschlossenen Aufnahmeraum. Der Dosenkörper ist mindestens aus einer Bodenfläche, einer Mantelfläche und einer Aufnahmeöffnung gebildet. Dabei ist der seitlich angeschlossene Aufnahmeraum mit Abstand zur Aufnahmeöffnung an der Mantelfläche des Dosenkörpers angeordnet.

Aus der US 3 980 197 ist eine Installationsdose nach dem Oberbegriff des Anspruch 1 bekannt.

In die Beplankung der Hohlwand wird eine Öffnung eingebracht, deren Ausmaße lediglich zur Aufnahme des Dosenkörpers bemessen sind. Der seitlich angeschlossene Aufnahmeraum verschwindet im montierten Zustand hinter der verbleibenden Beplankung. Der Abstand zur Aufnahmeöffnung, in der der Aufnahmeraum seitlich an dem Dosenkörper angeschlossen ist, entspricht zumindest der Wandstärke der Beplankung.

Bei den genannten Entgegenhaltungen wird der Dosenkörper mit dem daran angebrachten Aufnahmeraum montiert, indem zunächst der Aufnahmeraum durch die Öffnung in der Beplankung der Hohlwand eingeführt wird. Durch eine Drehbewegung wird anschließend der Dosenkörper in der Öffnung der Beplankung der Hohlwand positioniert und montiert.

Der Dosenkörper mit dem daran angebrachten Aufnahmeraum ist damit L-förmig bzw. sockenförmig ausgestaltet. Im Fersenbereich der sockenförmig ausgestalteten Hohlwanddose ist der Verlauf der äußeren Oberfläche der Hohlwanddose derart, dass diese mit der Drehbewegung durch die Öffnung in der Beplankung eingeführt werden kann.

Aus der DE 20 2012 005 863 U1 ist eine entsprechende Installationsdose für die Unterputzmontage bekannt. Dazu wird ein entsprechend großes Loch in die Wand gestemmt, die Dose eingesetzt und anschließen eingegipst. Der seitliche Aufnahmeraum wird nach dem Einsetzen der Unterputz-Installationsdose von vorne übergipst.

Der Erfindung liegt die Aufgabe zugrunde, eine Hohlwandinstallationsdose zu schaffen, die einfach in der Handhabung ist und außer einem Aufnahmeraum für ein elektrotechnisches oder elektronisches Bauelement noch einen weiteren Installationsraum aufweist.

Zur Lösung dieser Aufgabe wird gemäß Anspruch 1 eine Hohlwandinstallationsdose vorgeschlagen zur Aufnahme von elektrotechnischen oder elektronischen Bauelementen. Die Hohlwandinstallationsdose besteht aus einem Dosenkörper und einem daran seitlich angeschlossenen Aufnahmeraum. Der Dosenkörper ist mindestens aus einer Bodenfläche, einer Mantelfläche und einer Aufnahmeöffnung gebildet. Der seitlich angeschlossene Aufnahmeraum ist mit Abstand zur Aufnahmeöffnung an der Mantelfläche des Dosenkörpers angeordnet. Die Längsachse des seitlich angeschlossenen Aufnahmeraums ist zumindest im Wesentlichen rechtwinklig angeordnet zur Längsachse des Dosenkörpers, so dass die Installationsdose insgesamt L-förmig bzw. sockenförmig ausgebildet ist.

Nach Anspruch 1 besteht der Dosenkörper in einem Teilbereich seiner Oberfläche zumindest teilweise aus weichelastischem Material. Dieser Teilbereich ist der Fersenbereich der L-förmig bzw. sockenförmig ausgebildeten Installationsdose. Die Ausbildung der Oberfläche des Dosenkörpers in diesem Teilbereich ist derart, dass die Oberfläche des Dosenkörpers in diesem Fersenbereich in das innere Volumen der Installationsdose hineinstülpbar ist.

Durch das Vorhandensein eines weichelastischen Materials in zumindest einem Teil eines Teilbereichs der Oberfläche des Dosenkörpers wird ermöglicht, dass der weichelastische Teilbereich für das Einbringen der Installationsdose in den Innenraum der Installationsdose eingedrückt werden kann. Mit der Oberfläche des Dosenkörpers ist die Wand des Dosenkörpers in ihrer vollen Wandstärke gemeint.

Dieser Teilbereich muss dabei nicht unbedingt vollständig aus weichelastischem Material bestehen. Es ist dabei ausreichend, wenn der Teilbereich insgesamt so weit in das Innere der Hohlwandinstallationsdose eingedrückt werden kann, dass die Hohlwandinstallationsdose durch eine Drehbewegung in eine passgenaue Öffnung in einer Beplankung einer Hohlwand oder Hohldecke eingeführt werden kann. Ein Beispiel für Zonen in dem Teilbereich, die aus hartelastischem Material gefertigt sind, ist durch die Ausführungsform nach den Ansprüchen 8 und 9 gegeben.

Der seitlich angeschlossene Aufnahmeraum kann beispielsweise im Wesentlichen rechtwinklig zum Dosenkörper angeordnet sein. Damit ergibt sich dann eine "sockenförmige" Ausgestaltung der Hohlwandinstallationsdose insgesamt. Zum Einführen der Hohlwandinstallationsdose in die Öffnung der Beplankung kann in einem ersten Schritt der seitlich angeschlossene Aufnahmeraum mit seiner Spitze (die auf der gegenüberliegenden Seite von dem "Fersenbereich" der Hohlwandinstallationsdose angeordnet ist) in die Öffnung der Beplankung eingeführt werden.

Da die Installationsdose keine harte bzw. starre Bodenfläche aufweist und weiterhin der dem seitlich angeschlossenen Aufnahmeraum gegenüberliegende Teil der Mantelfläche ebenfalls aus verformbaren weichelastischem Material besteht, kann die Hohlwandinstallationsdose in einem zweiten Schritt durch eine zur Wand hin führende Kippbewegung in die Hohlwand eingebracht werden. Die Kippbewegung erfolgt gleichzeitig nach vorne (zur Beplankung hin) und seitlich (parallel zur Wand). Während des Einbringens der Installationsdose verdrängt der seitlich angeschlossene Aufnahmeraum, der im Wesentlichen aus hartelastischem Kunststoff besteht, durch diese Kippbewegung das Füllmaterial der Hohlwand, welches ggf. zwischen den Beplankungen der Hohlwand eingebracht ist.

Der seitlich angeschlossene Aufnahmeraum befindet sich daraufhin in dem Zwischenfüllbereich, das heißt zwischen den beidseitigen wandformenden Beplankungen der Hohlwand.

Es ist für die Installationsdose vorgesehen, dass an der Aufnahmeöffnung des Dosenkörpers ein Kragen vorhanden ist. Dieser Kragen wirkt mit Spannelementen zusammen, die die Öffnung in der Beplankung hintergreifen. Dadurch ist die Hohlwandinstallationsdose insgesamt montiert.

Um eine weitgehende Luftdichtheit und Winddichtheit im Bereich der Anordnung der Hohlwanddose zu schaffen, kann weiterhin vorgesehen sein, dass außenseitig an der Aufnahmeöffnung des Dosenkörpers ein Dichtkragen oder ein Dichtungskörper angeordnet ist, so dass die Installationsdose abdichtend in der entsprechenden Bohrung der Beplankung angeordnet ist.

Nachdem die Installationsdose vollständig in die Hohlwand eingebracht wurde und entsprechend positioniert ist, kann das weichelastische Material des Dosenkörpers wieder nach außen (in die ursprüngliche Form einer Dose) gedrückt werden, so dass das Innenvolumen des Dosenkörpers wieder dem einer gängigen Hohlwanddose entspricht.

Da die Innenvolumina des Dosenkörpers mit dem des seitlich angeschlossenen Aufnahmeraums über eine Öffnung in der Mantelfläche des Dosenkörpers verbunden sind, können die elektrotechnischen oder elektronischen Bauelemente sowohl vor der Installation, als auch nach der Installation der Installationsdose in diese eingebracht werden. Im Falle, dass das Bauelement in dem seitlich angeschlossenen Aufnahmeraum nicht mit dem Bauelement in dem Dosenkörper verbunden werden soll, ist ebenso vorgesehen, dass die Öffnung zwischen dem seitlich angeschlossenen Aufnahmeraum und dem Dosenkörper durch eine Kunststoffplatte reversibel oder irreversibel (durch entsprechende Klickverbindungen) verschlossen werden kann.

Der Durchmesser des Dosenkörpers beträgt vorzugsweise 68 mm. Jedoch ist es auch vorstellbar, dass der Durchmesser zwischen 35 mm und 74 mm beträgt.

Das weichelastische Material besteht vorzugsweise aus einem flammwidrigen Werkstoff, beispielsweise aus Silikon. Insbesondere ist vorgesehen, dass das weichelastische Material ein Kunststoff ist, insbesondere ein Elastomer. Durch das weichelastische Material wird ermöglicht, dieses zu verformen.

Durch das weichelastische Material wird erreicht, dass die Oberfläche des Teilbereichs in das innere Volumen der Hohlwandinstallationsdose hineingestülpt werden kann. In dieser Position kann die Hohlwandinstallationsdose mit dem Aufnahmeraum auch dann in eine Öffnung eingesetzt werden, wenn diese Öffnung gerade dem Durchmesser des Dosenkörpers entspricht. Es hat sich hierbei als vorteilhaft erwiesen, wenn durch das Einstülpen des Teilbereichs in das Innere der Hohlwandinstallationsdose hinein das Volumen der Hohlwandinstallationsdose um wenigstens 10% verringert wird. Besonders vorteilhaft wird dabei das Volumen der Hohlwandinstallationsdose um wenigstens 25% verringert.

Diese Verringerung des Volumens durch das Einstülpen des Teilbereichs geht mit einer Verformung der Oberfläche einher. Diese Verformung der Oberfläche führt dazu, dass die Hohlwandinstallationsdose beim Einsetzen in die Öffnung so gedreht werden kann, dass der seitlich angeschlossene Aufnahmeraum die Beplankung der Hohlwand seitlich von der Öffnung hintergreift.

Die Ferse des Fersenbereichs der Installationsdose ist gegenüberliegend von dem seitlich angeschlossenen Aufnahmeraum angeordnet. Wie zuvor oben beschrieben, kann dieser Fersenbereich, da er zumindest teilweise aus weichelastischem Material besteht, in das Innenvolumen des Dosenkörpers eingedrückt werden. Der Dosenkörper hat durch dieses Eindrücken eine verringerte Außendimension. Insbesondere sind während des Einführens der Installationsdose keine harten Bereiche gegenüberliegend zu dem seitlich angeordneten Aufnahmeraum vorhanden. Dadurch kann die Hohlwandinstallationsdose durch die Kippbewegung in die kreisrunde Bohrung eingebracht werden, ohne dass der Dosenkörper an der Beplankung hängenbleibt oder diese beschädigt.

Der Fersenbereich muss wiederum nicht unbedingt vollständig aus dem weichelastischen Material bestehen. Hierzu wird wiederum auf die Ansprüche 8 und 9 verwiesen.

Eine Weiterbildung der Erfindung besteht gemäß Anspruch 2 darin, dass der seitlich angeschlossene Aufnahmeraum zumindest im Wesentlichen aus hartelastischem Kunststoff besteht.

Dieser hartelastische Kunststoff besteht vorzugsweise aus einem flammwidrigen Kunststoff. Weiterhin ist vorzugsweise vorgesehen, dass der Kunststoff ein relativ hart eingestellter Thermoplast ist sowie vorzugweise kaum oder keinen Elastomeranteil aufweist. Dieser Aufnahmeraum kann auf seiner Oberfläche wiederum einzelne Bereiche aufweisen, die aus einem weichelastischen Material bestehen. Diese Bereiche können wiederum vorgesehen sein zur Einführung von Kabeln oder Leerrohren in diesen Aufnahmeraum der Hohlwandinstallationsdose.

Im Rahmen der Erfindung ist gemäß Anspruch 3 vorgesehen, dass die Bodenfläche des Dosenkörpers zumindest im Wesentlichen aus weichelastischem Material gebildet ist.

Durch diese Anordnung wird ermöglicht, dass die gesamte Bodenfläche in den Innenraum des Dosenkörpers geschoben bzw. gedrückt werden kann.

Vorteilhaft ist gemäß Anspruch 4, dass die Mantelfläche des Dosenkörpers mit einem ersten Mantelflächenabschnitt von der Bodenfläche abragt und mindestens eine Höhe aufweist, die zumindest im Wesentlichen der Höhe des seitlich angeschlossenen Aufnahmeraums zuzüglich der Wandstärke der Beplankung der Hohlwand entspricht, wobei der Dosenkörper in diesem Mantelflächenabschnitt teilweise aus hartelastischem Kunststoff und teilweise aus weichelastischem Material besteht, und wobei sich ein weiterer Mantelflächenabschnitt anschließt, in dem die Aufnahmeöffnung angeordnet ist, wobei dieser Mantelflächenabschnitt ausschließlich aus hartelastischem Kunststoff besteht.

Durch diese Ausgestaltung wird vorteilhaft erreicht, dass der Bereich der Hohlwandinstallationsdose soweit aus weichelastischem Material gefertigt ist, dass sich durch ein Eindrücken dieses Bereiches in das Innere der Hohlwandinstallationsdose die beschriebene Kippbewegung beim Einbau der Hohlwandinstallationsdose ausführen lässt. Durch den sich anschließenden Bereich aus hartelastischem Kunststoff wird vorteilhaft erreicht, dass die Hohlwandinstallationsdose in der Einbauposition stabil in der Öffnung der Beplankung gehalten wird.

Vorteilhaft ist gemäß Anspruch 5 vorgesehen, dass die Höhe des weiteren Mantelflächenabschnittes mindestens der Wandstärke der Beplankung der Hohlwand entspricht.

Dies bedeutet weiterhin, dass der weitere Mantelflächenabschnitt mindestens eine Höhe von 10 mm aufweist.

Es ist üblich, aus Brandschutzgründen eine Doppelbeplankung mit Gipskartonplatten vorzusehen. Dadurch werden sogenannt F90-Wände erreicht. Übliche Gipskartonplatten haben eine Wandstärke von etwa 12 bis 15 mm. Um auch bei einer Doppelbeplankung eine ausreichende Tiefe der Hohlwandinstallationsdose mit dem hartelastischen Kunststoff zu erhalten, der die Öffnung in der Beplankung durchdringt bevor der Bereich aus weichelastischem Material beginnt, kann die Höhe des weiteren Mantelflächenabschnitts in einem Bereich größer als 25 mm liegen, vorteilhaft in einem Bereich größer als 30 mm.

Durch diese Anordnung kann vorteilhaft erreicht werden, dass die Aufnahmeöffnung des Dosenkörpers stabil in der Beplankung befestigt wird.

Zur Fixierung der Installationsdose in dem Durchbruch sind üblicherweise Stellschrauben mit entsprechenden Haltegliedern außenseitig der Dose vorgesehen und an der Dose gehaltert, wobei die entsprechenden Schrauben von der Frontseite der Dose her zugänglich sind, um das Halteglied rückseitig gegen die Wandung neben der Öffnung in der Beplankung anzupressen und so für sicheren Sitz der Hohlwanddose zu sorgen.

Um die Installationsdose in der Hohlwand ausreichend stabil zu befestigen, ist gemäß Anspruch 6 vorgesehen, dass der Dosenkörper mindestens zwei Aufnahmevorrichtungen für Befestigungsmittel (Klemmschrauben bzw. Metallkrallen, Spannpratzen) aufweist.

Diese sind in einer Vormontagelage derart eingestellt, dass sie innerhalb der Umfangsfluchtlinie des Dosenkörpers liegen. Nachdem die Installationsdose in die Hohlwand eingebracht ist, werden die Befestigungsmittel durch ein Anziehen der Stellschrauben in eine zweite Position verstellt, so dass sie über die Umfangsfluchtlinie des Dosenkörpers hinausragen. Durch ein weiteres Anziehen der Stellschrauben werden diese Befestigungsmittel von hinten an die Beplankung herangezogen und hintergreifen dann die Beplankunug. Im Zusammenwirken mit dem bereits beschriebenen Kragen am Außenumfang der Öffnung der Hohlwandinstallationsdose wird die Hohlwandinstallationsdose somit befestigt.

Es ist gemäß Anspruch 7 vorgesehen, dass der aus hartelastischem Kunststoff bestehende Bereich der Mantelfläche des Dosenkörpers und/oder der seitlich angeschlossene Aufnahmeraum Öffnungen, Ausbrechstellen und/oder Bereiche aus weichelastischem Kunststoff aufweist.

Die Installationsdose selbst weist somit eine geschlossene Mantelfläche und eine geschlossene Bodenfläche auf, in denen gegebenenfalls ausbrechbare, ausschneidbare oder ausstanzbare Durchbrüche zum Einführen von Kabeln oder dergleichen gesetzt werden können.

Eine bevorzugte Ausgestaltung gemäß Anspruch 8 sieht vor, dass in dem aus weichelastischem Material bestehenden Teilbereich des Dosenkörpers mindestens eine Ringvorrichtung aus hartelastischem Kunststoff angeordnet ist.

Da das weichelastische Material keinen Kabelrückhalt abbilden kann, sind die Ringvorrichtungen notwendig, wenn Kabel oder Dergleichen durch den aus weichelastischem Material bestehenden Fersenbereich in den Dosenkörper eingeführt werden sollen. Vorzugsweise bestehen die Ringvorrichtungen aus einem Hartmaterial, wie beispielsweise Kunststoff, und sind an das weichelastische Material angespritzt. Um das weichelastische Material weiterhin biegen bzw. verformen zu können, ist zudem vorgesehen, dass die Ringvorrichtungen voneinander beabstandet sind.

Für die Ausgestaltung nach Anspruch 8 ist gemäß Anspruch 9 weiterhin vorgesehen, dass die mindestens eine Ringvorrichtung einen Ringvorrichtungsinnenbereich aufweist, der aus einer Öffnung, einer Ausbrechstelle oder aus weichelastischem Material gebildet ist.

Dadurch wird es in besonders einfacher Weise möglich, Kabel bzw. Leerrohre für Kabel in diesen Ringbereichen einzuführen.

Anspruch 10 beschreibt ein Verfahren zur Montage einer vorgenannten Installationsdose nach der vorliegenden Erfindung. 10. Dabei wird der zumindest teilweise aus weichelastischem Material bestehende Fersenbereich der Installationsdose in die Installationsdose hineingestülpt. Weiterhin wird der seitlich angeschlossene Aufnahmeraum der Installationsdose in die Öffnung der Beplankung der Hohlwand eingeführt. In einem nachfolgenden Arbeitsschritt wird der Dosenkörper durch eine Drehbewegung in der Öffnung der Beplankung der Hohlwand positioniert. Nachfolgend wird der eingestülpte Fersenbereich der Installationsdose wieder herausgedrückt.

Nachfolgend wird die Erfindung anhand von Zeichnungen dargestellt.

Es zeigen
- Fig. 1: eine erfindungsgemäße Installationsdose in Seitenansicht und
- Fig. 2: eine erfindungsgemäße Installationsdose in Seitenansicht mit einer Ringvorrichtung.

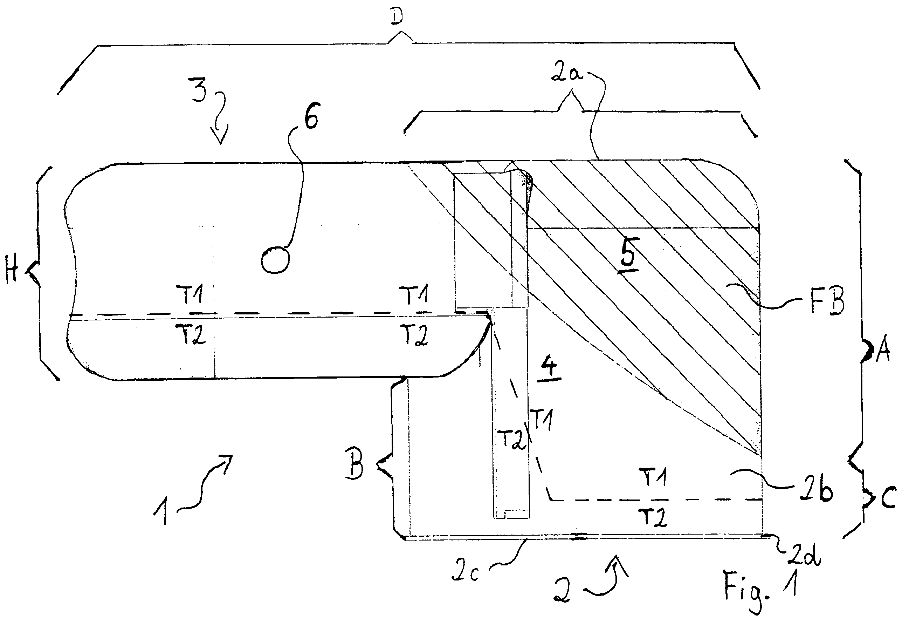

Wie in Figur 1 ersichtlich, besteht die Installationsdose (1) für die Hohlwandinstallation zur Aufnahme von elektrotechnischen oder elektronischen Bauelementen aus einem Dosenkörper (2) und einem daran seitlich angeschlossenen Aufnahmeraum (3). Der Dosenkörper (2) ist aus einer Bodenfläche (2a), einer Mantelfläche (2b) und einer Aufnahmeöffnung (2c) gebildet. Der seitlich angeschlossene Aufnahmeraum (3) ist mit Abstand (B) zur Aufnahmeöffnung (2c) an der Mantelfläche (2b) des Dosenkörpers (2) angeordnet. Hierbei ist die Längsachse des seitlich angeschlossenen Aufnahmeraums (3) zumindest im Wesentlichen rechtwinklig angeordnet zur Längsachse des Dosenkörpers (2), so dass die Installationsdose insgesamt L-förmig bzw. sockenförmig ausgebildet ist.

Der Fersenbereich (FB) der L-förmig bzw. sockenförmig ausgebildeten Installationsdose (1) besteht zumindest insoweit aus weichelastischem Material (5), dass dieser Fersenbereich (FB) zum Einsetzen der Installationsdose in eine Öffnung in der Beplankung der Hohlwand in die Installationsdose (1) hineingedrückt werden kann. Nach der Positionierung der Installationsdose (1) in der Öffnung der Beplankung wird dieser, für die Positionierung der Installationsdose (1) eingedrückte Bereich wieder herausgedrückt, so dass der volle Installationsraum der Installationsdose (1) zur Verfügung steht. Um den Fersenbereich (FB) eindrücken zu können, muss dieser nicht unbedingt vollständig aus weichelastischem Material gefertigt sein. In dem Fersenbereich FB können auch Teilbereiche aus hartelastischem Material (Kunststoff) integriert sein. Diese müssen zum einen in ihrer Größe begrenzt sein und zum anderen derart von weichelastischem Material umgeben sein, dass der Fersenbereich (FB) insgesamt in die Installationsdose (1) hineingedrückt werden kann.

Die Restoberfläche des Dosenkörpers (2) sowie der seitlich angeschlossene Aufnahmeraum (3) bestehen im Wesentlichen aus hartelastischem Kunststoff. Dabei kann es sich um das üblicherweise verwendete Kunststoffmaterial zur Herstellung herkömmlicher Hohlwandinstallationsdosen handeln.

Wie aus Fig. 1 weiter ersichtlich, ragt die Mantelfläche (2b) des Dosenkörpers (2) mit einem ersten Mantelflächenabschnitt (A) von der Bodenfläche (2a) ab.

Dieser erste Mantelflächenabschnitt (A) weist hierbei eine Höhe auf, die zumindest im Wesentlichen der Höhe (H) des seitlich angeschlossenen Aufnahmeraums (3) zuzüglich der Wandstärke einer üblichen Beplankung einer Hohlwand entspricht. Es ist ersichtlich aus Fig. 1, dass der Dosenkörper in diesem Mantelflächenabschnitt (A) teilweise aus hartelastischem Kunststoff (4) und teilweise aus weichelastischem Material (5) besteht.

In dem dargestellten Beispiel ist der Mantelflächenabschnitt (A) aus weichelastischem Material der Fersenbereich (FB). Der Fersenbereich (FB) kann sowohl die gesamte Bodenfläche (2a) des Dosenkörpers (2) beinhalten, jedoch auch nur teilweise die Bodenfläche beinhalten.

An den Mantelflächenabschnitt (A) schließt sich ein weiterer Mantelflächenabschnitt (C) an. In diesem weiteren Mantelflächenabschnitt (C) ist die Aufnahmeöffnung (2c) angeordnet. Es ist vorgesehen, dass dieser Mantelflächenabschnitt (C) ausschließlich aus hartelastischem Kunststoff besteht. Dadurch ergibt sich eine stabile Halterung der Hohlwandinstallationsdose (1) in der Öffnung der Beplankung nach der Positionierung der Hohlwandinstallationsdose (1).

Der Dosenkörper (2) weist in dem dargestellten Ausführungsbeispiel zwei Aufnahmevorrichtungen (7) für mechanische Befestigungsmittel (Klemmschrauben bzw. Metallkrallen, Spannpratzen) auf. Nachdem die Installationsdose in die Hohlwand eingebracht ist, werden diese Befestigungsmittel in eine derartige Position verstellt, so dass sie über die Umfangsfluchtlinie des Dosenkörpers (2) hinausragen. Diese Befestigungsmittel hintergreifen dabei die Beplankung der Hohlwand. Durch das Verstellen der Befestigungsmittel wird der Dosenkörper (2) - und damit die Installationsdose (1) insgesamt - durch das Zusammenwirken mit der vorderen Anlageschulter (2d) der Aufnahmeöffnung (2c) in dieser Position fixiert und lagesicher gehalten.

Da der Dosenkörper (2) mit dem seitlich angeschlossenen Aufnahmeraum (3) vorzugsweise als endfest verbundene Einheit, nämlich die Installationsdose (1), zum Verkauf angeboten wird, wird somit die Installationsdose (1) insgesamt fixiert und lagesicher gehalten.

Die Herstellung der Installationsdose (1) erfolgt durch das endfeste und vorzugsweise luftdichte Verbinden von zwei separat gefertigten Teileinheiten (T1, T2). Das endfeste Verbinden kann beispielsweise über eine rastende Verbindung erreicht werden. Das luftdichte Verbinden kann beispielsweise durch ein ineinander eingreifendes Stecksystem (Mutter-Vater-Anordnung) und/oder durch eine Versiegelung in dem Verbindungsbereich der Teileinheiten (T1, T2) erreicht werden. Dies kann beispielsweise erfolgen, indem entlang der Verbindungslinier der beiden Teileinheiten T1 und T2 eine Nut- / Federverbindung verläuft. Eine besonders gute Abdichtung wird erreicht, wenn die Nut - zumindest teilweise - mit einem weichelastischen Material gefüllt ist, das beim Einbringen der Feder soweit verdrängt bzw. deformiert wird, dass dieses weichelastische Material die Feder abdichtend umschließt.

Weiterhin ist in Fig. 1 gezeigt, dass der aus hartelastischem Kunststoff bestehende Bereich der Mantelfläche (2b) des Dosenkörpers (2) und/oder der seitlich angeschlossene Aufnahmeraum (3) Öffnungen bzw. Ausbrechstellen (6) zur Kabeleinführung bzw. zur Einführung von Leerrohren für Kabel aufweist. Anstelle der Öffnung bzw. Ausbrechstellen können diese vorgesehenen Stellen (6) auch mit einem weichelastischen Material überdeckt bzw. verschlossen sein. Diese wird beim Einstecken der Kabel bzw. Leerrohre durchstoßen und liegt dann abdichtend außen an den Kabeln bzw. Leerrohren an.

In der Darstellung der Figur 1 entspricht die Länge (D) der Installationsdose (1) der Länge einer bekannten Doppeldose. Damit lassen sich zwei elektrotechnische bzw. elektronische Bauteile nebeneinander anordnen. Für den Fall, dass lediglich eines dieser Bauteile für eine Bedienung aus der Wand herausragen muss und das andere Bauteil lediglich untergebracht werden muss, ohne dass dieses andere Bauteil für eine Bedienung erreichbar sein muss, erweist es sich weiterhin als vorteilhaft, dass lediglich eine Öffnung der Größe für eine Installationsdose für eines dieser Bauteile in die Beplankung eingebracht werden muss. Der Aufnahmeraum (3) für das andere Bauteil bleibt durch die Beplankung verdeckt. Die Installationsarbeit wird dadurch vorteilhaft vereinfacht, weil nicht zunächst eine für das Einbringen einer Doppeldose ausreichend große Öffnung in die Beplankung eingebracht werden muss, die anschließend teilweise wieder verschlossen werden muss.

Im Bereich der Aufnahmeöffnung (2c) - entweder am Kragen (2d) oder an dem Teil der Außenwand der Installationsdose im Bereich der Aufnahmeöffnung, der auf der Innenseite der Laibung der Öffnung der Beplankung der Hohlwand angeordnet ist - kann weiterhin ebenfalls ein weichelastisches Material angeformt sein. Durch eine Verformung dieses weichelastischen Materials beim Einsetzen und Befestigen der Hohlwandinstallationsdose wird die Öffnung vorteilhaft insgesamt abgedichtet. Dadurch können Zugluft sowie auch Schallübertragung vermieden werden.

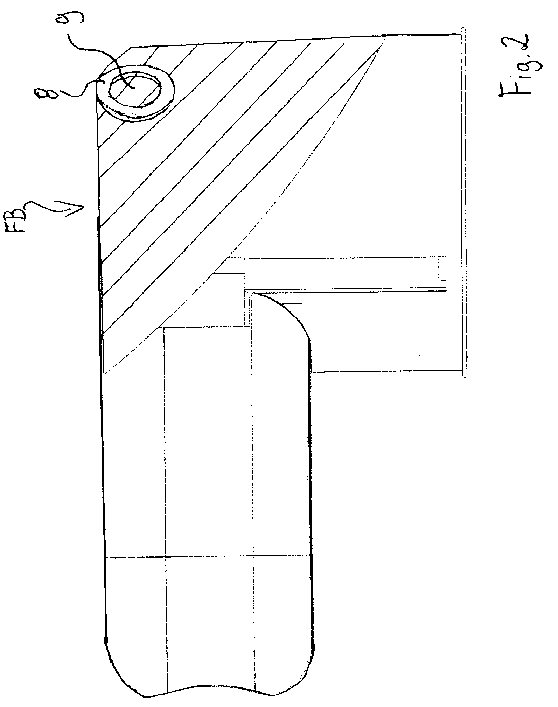

Fig. 2 entspricht im Wesentlichen der Fig. 1. Von der Bezeichnung der übereinstimmenden Teile wurde bei der Figur 2 abgesehen. Wie jedoch in Figur 2 gezeigt, ist in dieser Ausführungsform der Installationsdose in dem aus weichelastischem Material bestehenden Teilbereich (FB) des Dosenkörpers mindestens eine Ringvorrichtung (8) aus hartelastischem Kunststoff angeordnet. Die Ringvorrichtung (8) weist einen Ringvorrichtungsinnenbereich (9) auf, der aus einer Öffnung, einer Ausbrechstelle oder aus weichelastischem Material zur Kabeleinführung bzw. zur Einführung von Leerrohren für Kabel gebildet ist. Vorteilhaft wird dadurch erreicht, dass auch eine mechanisch ausreichend stabile Möglichkeit vorgesehen werden kann, um ein Kabel oder ein Leerrohr auch in dem Teilbereich (FB) der Installationsdose (1) einführen zu können.

## Patentansprüche

1. Installationsdose (1) für die Hohlwandinstallation zur Aufnahme von elektrotechnischen oder elektronischen Bauelementen, bestehend aus einem Dosenkörper (2) und einem daran seitlich angeschlossenen Aufnahmeraum (3), wobei der Dosenkörper (2) mindestens aus einer Bodenfläche (2a), einer Mantelfläche (2b) und einer Aufnahmeöffnung (2c) gebildet ist, wobei der seitlich angeschlossene Aufnahmeraum (3) mit Abstand zur Aufnahmeöffnung (2c) an der Mantelfläche (2b) des Dosenkörpers (2) angeordnet ist, wobei die Längsachse des seitlich angeschlossenen Aufnahmeraums (3) zumindest im Wesentlichen rechtwinklig angeordnet ist zur Längsachse des Dosenkörpers (2), so dass die Installationsdose insgesamt L-förmig bzw. sockenförmig ausgebildet ist,
**dadurch gekennzeichnet, dass** die Oberfläche des Dosenkörpers (2) in einem Fersenbereich (FB) der L-förmig bzw. sockenförmig ausgebildeten Installationsdose zumindest teilweise aus weichelastischem Material (5) besteht derart, dass die Oberfläche des Dosenkörpers (2) in diesem Fersenbereich (FB) in das innere Volumen der Installationsdose (1) hineinstülpbar ist.

2. Installationsdose (1) nach Anspruch 1,
**dadurch gekennzeichnet, dass** der seitlich angeschlossene Aufnahmeraum (3) zumindest im Wesentlichen aus hartelastischem Kunststoff (4) besteht.

3. Installationsdose (1) gemäß Anspruch 1 oder 2,
**dadurch gekennzeichnet, dass** die Bodenfläche (2a) des Dosenkörpers (2) zumindest im Wesentlichen aus weichelastischem Material (5) gebildet ist.

4. Installationsdose (1) gemäß einem der Ansprüche 1 bis 3,
**dadurch gekennzeichnet, dass** die Mantelfläche (2b) des Dosenkörpers (2) mit einem ersten Mantelflächenabschnitt (A) von der Bodenfläche (2a) abragt und mindestens eine Höhe aufweist, die zumindest im Wesentlichen der Höhe (H) des seitlich angeschlossenen Aufnahmeraums (3) zuzüglich der Wandstärke der Beplankung der Hohlwand entspricht, wobei der Dosenkörper in diesem Mantelflächenabschnitt (A) teilweise aus hartelastischem Kunststoff (4) und teilweise aus weichelastischem Material (5) besteht, und wobei sich ein weiterer Mantelflächenabschnitt (C) anschließt, in dem die Aufnahmeöffnung (2c) angeordnet ist, wobei dieser Mantelflächenabschnitt (C) ausschließlich aus hartelastischem Kunststoff (4) besteht.

5. Installationsdose (1) gemäß Anspruch 4, **dadurch gekennzeichnet,**
**dass** die Höhe des weiteren Mantelflächenabschnittes (C) mindestens der Wandstärke der Beplankung der Hohlwand entspricht.

6. Installationsdose (1) gemäß einem der Ansprüche 1 bis 5,
**dadurch gekennzeichnet, dass** der Dosenkörper (2) mindestens zwei Aufnahmevorrichtungen (7) für Befestigungsmittel aufweist.

7. Installationsdose (1) gemäß einem der Ansprüche 1 bis 6,
**dadurch gekennzeichnet, dass** der aus hartelastischem Kunststoff bestehende Bereich der Mantelfläche (2b) des Dosenkörpers (2) und/oder der seitlich angeschlossene Aufnahmeraum (3) Öffnungen, Ausbrechstellen und/oder Bereiche (6) aus weichelastischem Material aufweist.

8. Installationsdose (1) gemäß einem der Ansprüche 1 bis 7,
**dadurch gekennzeichnet, dass** in dem aus weichelastischem Material (5) bestehenden Teilbereich des Dosenkörpers (2) mindestens eine Ringvorrichtung (8) aus hartelastischem Kunststoff angeordnet ist.

9. Installationsdose (1) gemäß Anspruch 8, **dadurch gekennzeichnet,**
**dass** die mindestens eine Ringvorrichtung (8) einen Ringvorrichtungsinnenbereich (9) aufweist, der aus einer Öffnung, einer Ausbrechstelle oder aus weichelastischem Material gebildet ist.

10. Verfahren zur Montage einer Installationsdose nach einem der Anspräche 1 bis 9,
**dadurch gekennzeichnet, dass** der zumindest teilweise aus weichelastischem Material bestehende Fersenbereich (FB) der Installationsdose in die Installationsdose (1) hineingestülpt wird, dass der seitlich angeschlossene Aufnahmeraum (3) der Installationsdose (1) in die Öffnung der Beplankung der Hohlwand eingeführt wird, dass in einem nachfolgenden Arbeitsschritt der Dosenkörper (2) durch eine Drehbewegung in der Öffnung der Beplankung der Hohlwand positioniert wird und
dass nachfolgend der eingestülpte Fersenbereich (FB) der Installationsdose wieder herausgedrückt wird.

## Claims

1. Installation box (1) for receiving electrotechnical or electronic components and intended for use with cavity walls, consisting of a box body (2) and, connected laterally thereto, a receptacle (3), said box body (2) comprising at least a bottom surface (2a), a curved surface (2b) and an opening (2c), the laterally connected receptacle (3) being disposed in contact with the curved surface (2b) of the box body (2) and spaced from the opening (2c), the longitudinal axis of the laterally connected receptacle (3) being at least substantially perpendicular to the longitudinal axis of the box body (2) and thereby giving the installation box an altogether L-shaped or sock-shaped configuration,
**characterised in that,** in a heel area (FB) of the L-shaped or sock-shaped installation box, the surface of the box body (2) consists at least partially of flexible material (5) so that, in this heel area (FB), the surface of the box body (2) can be folded into the interior volume of the installation box (1).

2. Installation box (1) according to claim 1,
**characterised in that** the laterally connected receptacle (3) consists at least substantially of an energy-elastic plastic (4).

3. Installation box (1) according to either claim 1 or claim 2,
**characterised in that** the bottom surface (2a) of the box body (2) is made at least substantially of flexible material (5).

4. Installation box (1) according to any one of the claims 1 to claim 3,
**characterised in that** a first section (A) of the curved surface (2b) of the box body (2) juts out from the bottom surface (2a) and has a height which corresponds at least substantially to the height (H) of the laterally connected receptacle (3) plus the wall thickness of the cavity-wall panelling, the box body in this section (A) of the curved surface consisting partially of energy-elastic plastic (4) and partially of flexible material (5), and a further section (C) of the curved surface adjoining said section (A) and containing the opening (2c), this section (C) of the curved surface being made exclusively of energy-elastic plastic (4).

5. Installation box (1) according to claim 4, **characterised in that** the height of the additional section (C) of the curved surface corresponds at least to the wall thickness of the cavity-wall panelling.

6. Installation box (1) according to any one of the claims 1 to claim 5,
**characterised in that** the box body (2) has at least two receiving contrivances (7) for anchoring means.

7. Installation box (1) according to any one of the claims 1 to claim 6,
**characterised in that** the energy-elastic plastic portion of the curved surface (2b) of the box body (2) and/or the laterally connected receptacle (3) has/have openings, break-out spots or areas (6) made of flexible material.

8. Installation box (1) according to any one of the claims 1 to 7,
**characterised in that** at least one ring device (8) consisting of energy-elastic plastic is located in the part of the box body (2) made of flexible material (5).

9. Installation box (1) according to claim 8, **characterised in that** the at least one ring device (8) has an inner portion (9) formed by an opening, a break-out spot or flexible material.

10. Method of fitting an installation box according to any one of the claims 1 to 9,
**characterised in that** the heel area (FB), which consists at least partially of flexible material, of the installation box is folded into the installation box (1), that the laterally connected receptacle (3) of the installation box (1) is introduced into the opening in the cavity-wall panelling, **that,** in a subsequent step, the box body (2) is positioned by twisting it in the opening in the cavity-wall panelling and that the folded-in heel area (FB) of the installation box is then pressed out again.

## Revendications

1. Boîtier d'installation (1) pour une installation dans un mur creux en vue de recevoir des éléments électrotechniques ou électroniques, se composant d'un corps de boîtier (2) et d'un espace de réception (3) raccordé à celui-ci latéralement, le corps de boîtier (2) étant formé au moins d'une surface de fond (2a), d'une surface d'enveloppe (2b) et d'une ouverture de réception (2c), l'espace de réception (3) raccordé latéralement étant disposé sur la surface d'enveloppe (2b) du corps de boîtier (2) à distance de l'ouverture de réception (2c), l'axe longitudinal de l'espace de réception (3) raccordé latéralement étant disposé au moins pour l'essentiel perpendiculairement à l'axe longitudinal du corps de boîtier (2) de sorte que le boîtier d'installation présente dans l'ensemble une forme en L ou de chaussette,
**caractérisé en ce que,** dans une zone de talon (FB) du boîtier d'installation en forme de L ou de chaussette, la surface du corps de boîtier (2) est constituée au moins en partie d'un matériau élastique souple (5) de sorte que la surface du corps de boîtier (2) dans cette zone de talon (FB) peut être rentré dans le volume intérieur du boîtier d'installation (1).

2. Boîtier d'installation (1) selon la revendication 1,
**caractérisé en ce que** l'espace de réception (3) raccordé latéralement est constitué au moins pour l'essentiel d'une matière plastique élastique rigide.

3. Boîtier d'installation (1) selon la revendication 1 ou 2,
**caractérisé en ce que** la surface de fond (2a) du corps de boîtier (2) est formée au moins pour l'essentiel dans un matériau élastique souple.

4. Boîtier d'installation (1) selon l'une des revendications 1 à 3,
**caractérisé en ce que** la surface d'enveloppe (2b) du corps de boîtier (2) dépasse avec une première section de surface d'enveloppe (A) de la surface de fond (2a) et présente au moins une hauteur qui correspond au moins pour l'essentiel à la hauteur (H) de l'espace de réception (3) raccordé latéralement plus l'épaisseur de paroi du revêtement du mur creux, le corps de boîtier, dans cette section de surface d'enveloppe (A), étant constitué en partie d'une matière plastique élastique rigide (4) et en partie d'un matériau élastique souple (5), et une autre section de surface d'enveloppe (C) s'y raccordant dans laquelle est disposée l'ouverture de réception (2c), cette section de surface d'enveloppe (C) étant constituée exclusivement d'une matière plastique élastique rigide.

5. Boitier d'installation (1) selon la revendication 4, **caractérisé en ce que** la hauteur de l'autre section de surface d'enveloppe (C) correspond au moins à l'épaisseur de paroi du revêtement du mur creux.

6. Boîtier d'installation (1) selon l'une des revendications 1 à 5,
**caractérisé en ce que** le corps de boîtier (2) est muni d'au moins deux dispositifs de réception (7) pour des moyens de fixation.

7. Boîtier d'installation (1) selon l'une des revendications 1 à 6,
**caractérisé en ce que** la partie de la surface d'enveloppe (2b) du boîtier d'installation constituée d'une matière plastique élastique rigide et/ou l'espace de réception (3) raccordé latéralement présentent des ouvertures, des parties pouvant être séparées par rupture et/ou des parties (6) en un matériau élastique souple.

8. Boîtier d'installation (1) selon l'une des revendications 1 à 7,
**caractérisé en ce qu**'au moins un dispositif annulaire (8) en matière plastique élastique rigide est disposé dans la partie du corps de boîtier (2) constituée d'un matériau élastique souple (5).

9. Boîtier d'installation (1) selon la revendication 8,
**caractérisé en ce que** le au moins un dispositif annulaire (8) présente une zone interne de dispositif annulaire (9) qui est formée par une ouverture, une partie pouvant être séparées par rupture ou d'un matériau élastique souple.

10. Procédé pour le montage d'un boîtier d'installation selon l'une des revendications 1 à 9,
**caractérisé en ce que** la zone de talon (FB) du boîtier d'installation constituée au moins en partie d'un matériau élastique souple est rentrée à l'intérieur du boîtier d'installation (1), **en ce que** l'espace de réception (3) raccordé latéralement du boîtier d'installation (1) est introduit dans l'ouverture du revêtement du mur creux, **en ce que** dans une étape suivante le corps de boîtier (2) est positionné dans l'ouverture du revêtement du mur creux par un mouvement de rotation et **en ce qu'**ensuite la zone de talon (FB) rentrée à l'intérieur est repoussée vers l'extérieur.
